# EUROPEAN PATENT APPLICATION

(11) **EP 1 743 687 A1**
(43) Date of publication of application: **17.01.2007**
(21) Application number: 06003522.7
(22) Date of filing: 21.02.2006
(51) Int. Cl.: B01D 46/24

(54) **Air filter**

(30) Priority: 12.07.2005 TW 94211833
(71) Applicant: Jui-Fa HUANG, Changhua County 504 (TW)
(72) Inventor: Jui-Fa HUANG, Changhua County 504 (TW)
(74) Representative: Viering, Jentschura & Partner

(57) **Abstract**

An air filter (10) includes a filter core (12) and a base (13). Outer air is filtered by the filter core (12), and then flows to the base (13), which has a passageway provided in its center and connected with an air intake of an engine. An air concentrating tube (133) is provided on the upper end of the passageway, extending in the inside of the filer fore, having an upper end with a large opening, gradually shrinking down to have a lower end with a trumpet shape. The large upper end of the air concentrating tube can permit filtered clean air to flow smoothly through into the passageway (134) so that no turbulent current may happen in the air filter and filtered clean air may flow in an engine smoothly for boosting effectiveness of burning in the engine.

## Description

### BACKGROUND OF THE INVENTION

### 1. Field of the Invention

This invention relates to an automobile air filter, particularly to one provided with a base, which has an air concentrating tube with an upper end with a large opening and gradually shrinking down to have a lower end with a small opening so that filtered clean air may largely and quickly flow into an engine of an automobile, enhancing largely burning effect of the engine.

### 2. Description of the Prior Art

When a conventional engine of an automobile needs mixed gas of air and gasoline for combustion, with an air intake of an engine connected with the air filter. However, external air is mixed with micro dust particles, potentially impairing an inner wall of the engine if these dust particles should enter the engine, cutting down the service life of an engine and a piston of its cylinder.

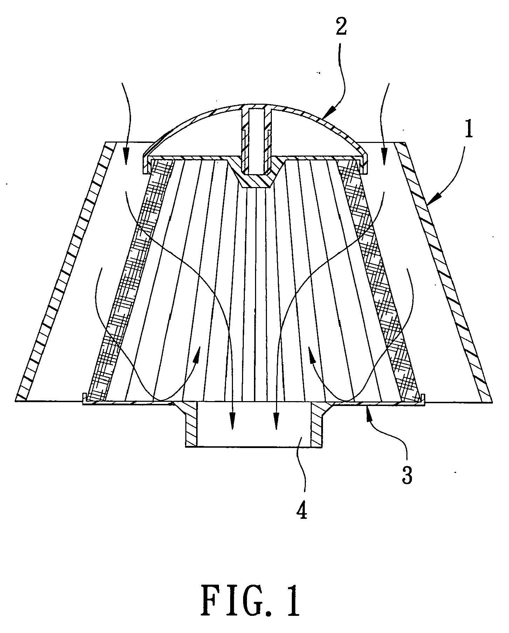

A know conventional air filter for automobiles shown in Fig. 1 includes a housing 1, an air filter core 2 and a base 3 as main components. The housing 1 is for collecting outer air to flow into the filter core 2, which filters off micro dust particles mixed in air, which may be remained on the outer surface of the filter core, letting filtered clean air flow into a passageway 4 in the center of the base 3, and then into the air intake of an engine of an automobile.

By the way, the diameter of the passageway 4 of the base 3 is rather small, and located at the same level of the bottom of the base 3 so filtered clean air may not be able to completely flow into the passageway 4, with partial clean air colliding the wall of the base 3 and becoming turbulent current, which may hamper smooth flow of filtered clean air into the engine. Therefore, the mixed gas flowing in the engine may have incorrect proportion so the mixed air and gas may not be able to burn completely and exhausted out of the engine, wasting partial gasoline and polluting the environment with mono oxide mixed in exhausted out gas,

### SUMMARY OF THE INVENTION

The invention has been devised to offer an air filter for an automobile to let filtered clean air to smoothly flow in the engine of an automobile.

The feature of the invention is a housing, a filter core, and a base combined together to make up an air filter. When outer air is guided to flow into the filter core from the housing, the filter core filters off micro dust particles. The base is combined with the filter core in a sealed condition, having a passageway in its center to connect with an intake of an engine. Further an air concentrating tube is provided in the base, facing the lower end of the filter core, having an upper end with a large opening and gradually shrinking down to have a lower end with a trumpet-shape so the filtered clean air may smoothly flow through it in an accelerated condition to enter the engine, not producing turbulent current, and accelerating its speed to flow into the engine, in which mixed air and gas may burn completely, lowering pollution by exhausted waste gas mixed with mono oxide.

### BRIEF DESCRIPTION OF DRAWINGS

This invention will be better understood by referring to the accompanying drawing wherein:
Figure 1 is a cross-sectional view of a conventional air filter;
Figure 2 is an exploded perspective view of a first embodiment of an air filter in the present invention;
Figure 3 is a cross-sectional view of the first embodiment of an air filter in the present invention;
Figure 4 is an exploded perspective view of a second embodiment of an air filter in the present invention;
Figure 5 is a cross-sectional view of the second embodiment of an air filter in the present invention;
Figure 6 is a cross-sectional view of a third embodiment of an air filter in the present invention;
Figure 7 is a cross-sectional view of a fourth embodiment of an air filter in the present invention; and,
Figure 8 is a perspective view of another embodiment of an air concentrating tube in the present invention.

### DETAILED DESCRIPTION OF THE PREFERRED EMBODIMENTS

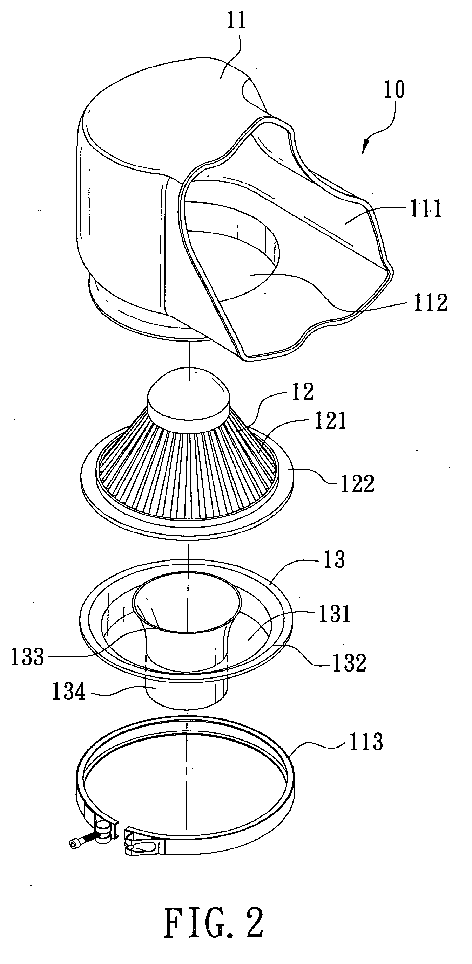

A first embodiment of an air filter 10 in the present invention, as shown in Fig. 2, includes a housing 11, a filter core 12, and a base 13 as main components combined together.

The housing 11 is hollow and provided with an air inlet 111 at one end and an air outlet 112 at the other end, and outer air flows through the air inlet 111 into the interior and then out of the air outlet 112 into the filter core 12, which is combined with the housing 11 at the air outlet 112 and with the base 13 at the same time.

The filter core 12 is shaped conical and made of a fiber net 121 with a plurality of projecting waves for augmenting its area to contact air so that micro dust particles mixed in outer air may be filtered off and remain on its outer surface, prevented from entering the interior of the filter core 12. Further, the filter core 12 has a hollow disc 122 formed in its lower end, and the hollow disc 122 has its upper surface contacting with the periphery of the air outlet 12, and its lower surface contacting with the upper periphery of the base 13, with a clamping ring 113 tightly clamping the filter core 12 and the base 13 with the housing 11.

The base 13 has a bottom 131, and a flange 132 just corresponding to the disc 122 of the filter core 12 and contacting with the air outlet 112 of the housing 11 in a sealed condition. Further, an air concentrating tube 133 is provided through the center portion of the bottom 131 of the base 13, having an upper end with a large opening and gradually shrinking down to have a lower end with a trumpet shape of a small area, and the upper end located a little higher than the flange 132 of the base 13 and just under the bottom of the filter core 12 after the filter core 12 is combined with the base 13. The air concentrating tube 133 has a passageway 134 extending down outward from its bottom and connected with the air intake (not shown) of the engine of an automobile.

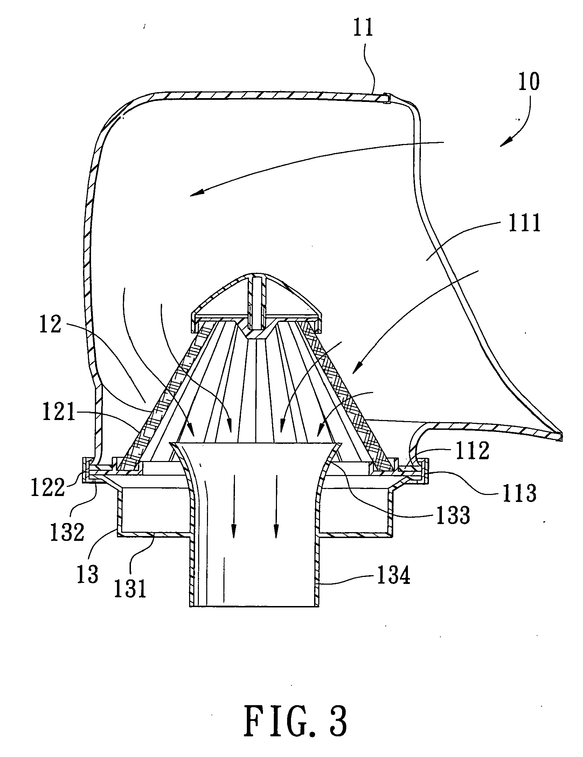

Next, the function of the air filter in the invention will be described below. As shown in Fig. 3, when the air filter 10 receives outer air, it may flow through the housing 11 into the filter core 12, which filters outer air and eliminates micro dust particles stopped on its outer surface of the fiber net 121 and then filtered clean air may flow into the air concentrating tube 133 of the base 13, which has the large upper end opening. Then the clean air may flow through the air concentrating tube 133 to become an accelerated current because of pressure change, so clean air may enter the passageway 134 smoothly and quickly enough for entering the engine, wherein mixed gas with air may burn completely, with the effectiveness of the engine boosted largely.

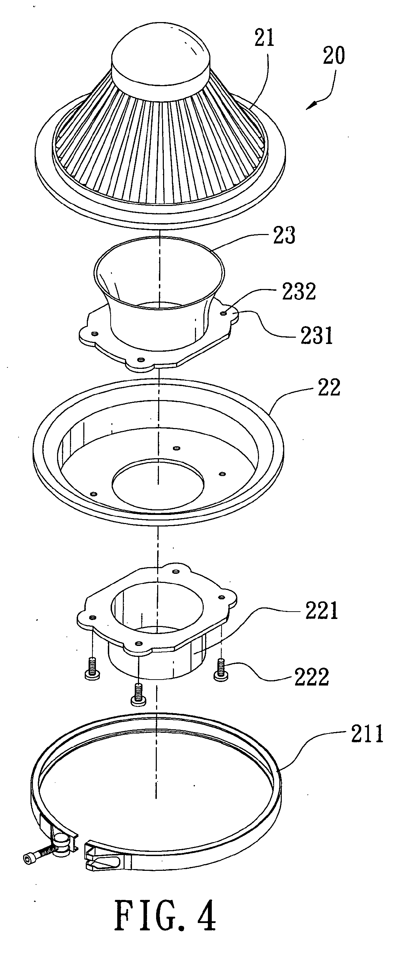

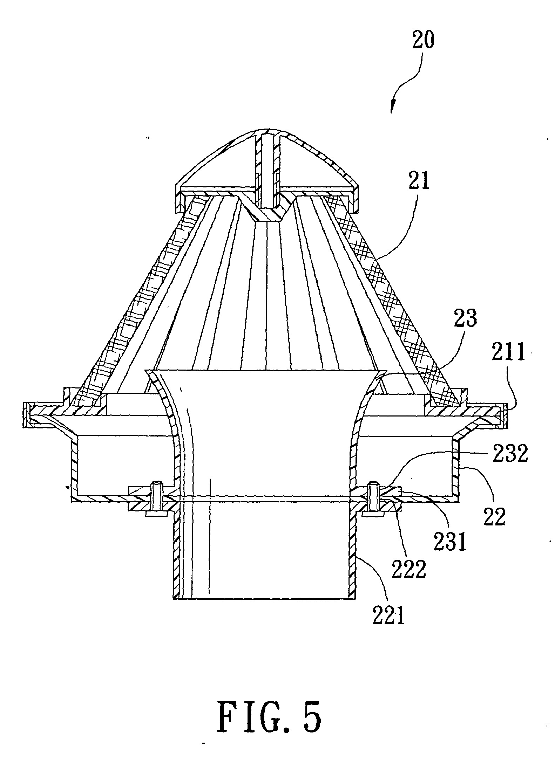

Next, Figs. 4 and 5 shows a second embodiment of an air filter 20, which includes a filter core 21, a base 22 and an air concentrating tube 23. Their structure are almost the same as the first embodiment, so only the different structure are to be described below.

The base 22 has a tubular passageway 221 formed in a lower portion, and the tubular passageway 221 has its upper periphery screwed with bolts 222 also screwing with bolt holes 232 bored in a bottom of the air concentrating tube 23, so the base 22 is tightly screwed together with the air concentrating tube 23. Further, a clamping ring 211 is fitted tightly around the flange of the filter core 21 and the flange of the base 22, combining together the filter core 21, the base 22 and the air concentrating tube 23. Therefore, if any components of the air filter 20 should be damaged, it would be easily, replaced with a new one, reducing repairing cost, needless to discard the whole air filter. In addition, the components can be made of different materials according to their function, beefing up the effect of the air filter as well.

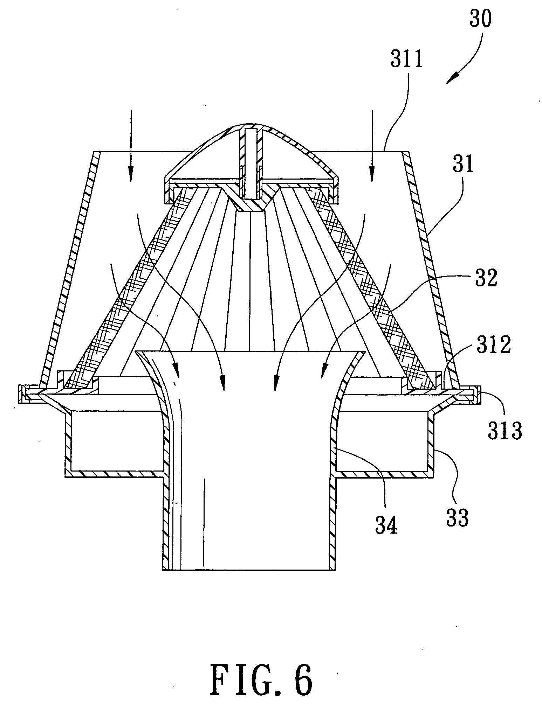

Further, Fig.6 shows a third embodiment of an air filter 30, which also includes a housing 31, a filter core 32, a base 33 and an air concentrating tube 34 formed integral with the base 33. Their structure is almost the same as the fitst embodiment, so the different structure only will be described below.

The housing 31 is shaped as a hollow round tube, having an upper air inlet 311 with a small diameter and a lower air outlet 312 with a large diameter. And the base 33 is tightly connected with the housing 31 by a clamping ring 313. When outer air flows through the air inlet 311 into the filter core 32, it flows into the upper portion of the filter core 32 and then into its interior in an even condition, with micro dust particles also evenly hampered and kept remained on the outer surface of the filter core to permit the filter core usable for a long time.

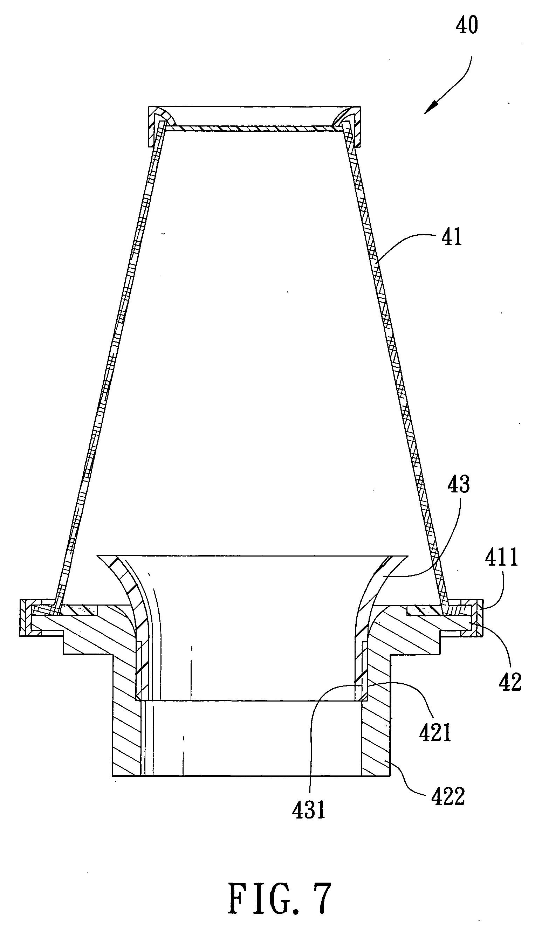

Further, Fig. 7 shows a fourth embodiment of an air filter 40 in the invention, which includes a filter core 41, a base 42 and an air concentrating tube 43. The different structure from the first embodiment is that the filter core 41 and the base 42 are firmly combined together by a clamping ring 411, and the passageway 421 of the base 42 is provided with female threads 422 in its inner wall to engage with male threads 431 formed in a lower portion of the air concentrating tube 43 so the passageway 421 may be threadably combined with the air concentrating tube 43 removably, with no need of other fastening means for lower cost.

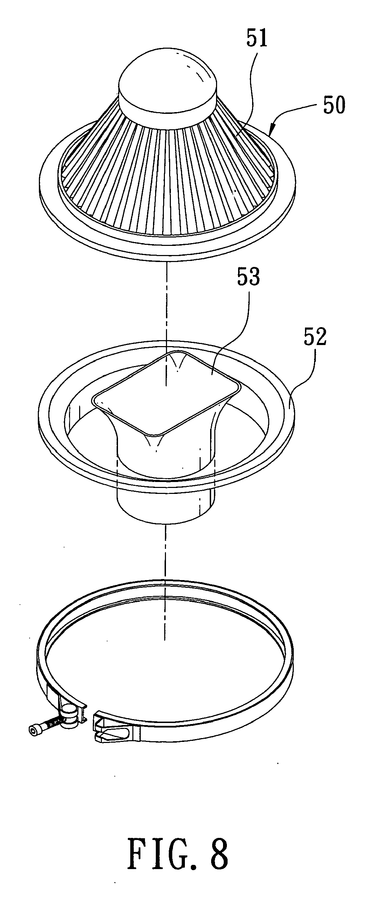

Next, another embodiment of an air concentrating tube 53 is shown in Fig. 8, which has an upper end with an opening with four sides and gradually shrinking down to have a lower end with a round trumpet shape so the air concentrating tube 53 has a comparatively large dimension for air to enter.

The invention has the following advantages as can be understood from the foresaid description.

The air filter has an air concentrating structure possible to let filtered clean air to flow through the air concentrating tube, which can boost the air to flow smoothly and in an accelerated speed to enter an engine of an automobile to permit mixed are and gas completely burn up to boost the effectiveness of the engine.

While the preferred embodiment of the invention have been described above, it will be recognized and understood that various modifications may be made therein and the appended claims are intended to cover all the modifications that may fall within the spirit and scope of the invention.

## Claims

1. An air filter comprising:
A filter core functioning to filter off micro dust particles mixed in air so that filtered cleans air may flow into a base, said filter core combined with said base in a sealed condition; and,
Said base provided with a passageway connected with an air concentrating tube extending upward, said air concentrating tube having an upper end with a large opening and gradually shrinking down to have a lower end with a trumpet shape of a small opening, said air concentrating tube having its upper end located a little higher than said base and a larger dimension than that of said passageway.

2. The air filter as claimed in Claim 1, wherein a housing is provided to cover up said filter core and said base, shaped hollow and having an air inlet and an air outlet, said air inlet guiding outer air into an interior of said housing to said air outlet, and said outlet is connected with said filter core and said base.

3. The air filter as claimed in Claim 1, wherein said base is provided with an upper flange, said filer core is provided with a hollow disc to correspond to said flange, said hollow disc is closely connected with said flange, with said air concentrating tube located a little higher than said flange and just at the lower end of said filer core.

4. The air filter as claimed in Claim 1, wherein said base and said air concentrating tube are formed integral.

5. The air filter as claimed in Claim 1, wherein a passageway member is removably connected with the bottom of said base, said air concentrating tube is provided with plural threaded holes in its bottom end, permitting said base tightly connected with said air concentrating tube with bolts.

6. The air filter as claimed in Claim 1, wherein said passageway of said base is provided with female threads in its inner wall, and said air concentrating tube is provided with male threads to engage with said female threads so that said passageway may be threadably connected with said air concentrating tube.

7. The air filter as claimed in Claim 1, wherein said air concentrating tube has an upper end with a round opening, shrinking down gradually to have a lower end with a trumpet shape.

8. The air filter as claimed in Claim 1, wherein said air concentrating tube is provided with an upper end with four sides, shrinking down gradually to have a lower end with a trumpet shape.

9. The air filter as claimed in Claim 1, wherein after said filter core is closely connected with said base, and a clamping ring is fixed around the connected part of said filter core and said base.
